# EUROPÄISCHE PATENTSCHRIFT

(11) **EP 0 844 018 B1**
(45) Veröffentlichungstag und Bekanntmachung des Hinweises auf die Patenterteilung: **26.04.2006**
(21) Anmeldenummer: 97117932.0
(22) Anmeldetag: 16.10.1997
(51) Int. Cl.: B01J 2/06, F25C 1/00

(54) **Verfahren und Vorrichtung zum Pelletieren oder Granulieren eines flüssigen oder pastösen Stoffes**
Process and device for pelletizing or granulating liquid or pasty material
Procédé et dispositif à granuler pour produit liquide ou pâteux

(30) Priorität: 22.11.1996 DE 19648394
(43) Veröffentlichungstag der Anmeldung: 27.05.1998
(73) Patentinhaber: Air Liquide Deutschland GmbH, 40235 Düsseldorf (DE); Messer Group GmbH, 65843 Sulzbach (DE)
(72) Erfinder: Buchmüller, Jürgen, 47803 Krefeld (DE); Zerwas, Stefan, 47443 Moers (DE)
(74) Vertreter: Kahlhöfer, Hermann

(56) Entgegenhaltungen:
- DE-C- 4 419 010
- US-A- 4 655 047
- US-A- 4 843 840

## Beschreibung

Die Erfindung betrifft ein Verfahren und eine Vorrichtung zum Pelletieren oder Granulieren eines flüssigen oder pastösen Stoffes in einem verflüssigten, tiefsiedenden Kühlmittel, wobei der Stoff in einen Strom des Kühlmittels eingetragen und zusammen mit dem Kühlmittel einer Trennvorrichtung zugeführt wird, in welcher der Stoff vom Kühlmittel getrennt und dieses wieder in den Verfahrenskreislauf zurückgeführt wird.

Ein Verfahren dieser Art ist aus der DE 43 29 110 C1 bekannt. Dabei wird im Inneren eines isolierten Gehäuses eine wasserfallartige Strömung des einzufrierenden Stoffes in einem nach oben offenen Reaktionsrohr erzeugt, dessen obere Öffnung sich etwa auf gleicher Höhe wie das Niveau des in das Gehäuseinnere eingeleiteten Kühlmittels befindet, so daß das Kühlmittel über den Rand der Öffnung in das Rohr überläuft, wobei der Stoff von oben über die Öffnung in das Reaktionsrohr eingeleitet wird. Am unteren Ende des Reaktionsrohres ist ein Rührwerk angeordnet, welches die Kühlmittel-/Stoffströmung über ein Förderrohr nach oben über das Niveau des verflüssigten Kühlmittels in eine Trennvorrichtung in Form einer Bandschnecke fördert, die schräg zum Gehäuse geneigt ist und Siebböden zum Trennen der ausgefrorenen Pellets vom Kühlmittel und am oberen Ende eine Austragsöffnung für die Pellets aufweist.

Bei dem bekannten Verfahren ist der Kühlmittel-/Stoffstrom turbulent. Da die in dem verflüssigten Kühlmittel, wie Stickstoff, eingefrorenen Pellets annähernd amorphe Kristallstruktur haben, weisen sie eine hohe Instabilität auf. Aufgrund der Turbulenz der Strömung und/oder der Beanspruchung durch das Rührwerk zerbrechen Pellets größeren Durchmessers (größer als 4 mm).

In der DE 44 19 010 C1 wird ein weiteres Verfahren mit einem turbulent strömenden Kühlmittel wie Flüssigstickstoff beschrieben, in dem Granutat hergestellt wird.

In der US 4 655 047 wird unter anderem eine Vorrichtung beschrieben, in der in einem Strom von Flüssigstickstoff in einer Fließwanne durchgefrorene Pellets hergestellt werden.

In der US 4 843 840 wird eine Vorrichtung beschrieben, in der aus einer Flüssigkeit gefrorene feste Partikel hergestellt werden, die über mit Flüssigstickstoff gekühlte Kanäle einer helikalen Trennvorrichtung zugeführt werden.

Der Erfindung liegt die Aufgabe zugrunde, ein Verfahren und eine Vorrichtung der eingangs beschriebenen Art anzugeben, mit dem sich großvolumige Pellets oder Granulatkörner problemlos mit hoher Ausbeute gefrieren lassen.

Zur Lösung dieser Aufgabe dienen ein Verfahren nach Anspruch 1 und eine Vorrichtung nach Anspruch 6.

Vorteilhafte Ausgestaltungen der Erfindung sind in den Unteransprüchen angegeben.

Bei einem Verfahren und einer Vorrichtung nach der Erfindung wird der Stoff in einen laminaren Strom des flüssigen Kühlmittels an einer Stelle stromabwärts von einer das Kühlmittel fördemden Pumpe eingetragen, wobei dafür gesorgt ist, daß die Strömung an der Eintragsstelle laminar ist Der eingetragene Stoff wird in einer laminaren Strömungsstrecke vor der Trennvorrichtung angefroren und in einer Gefrierzone der Trennvorrichtung ausgefroren.

Auf diese Weise lassen sich großvolumige Pellets des einzufrierenden Stoffes erzeugen, die weder einer turbulenten Strömung noch der mechanischen Beanspruchung eine Rührwerks ausgesetzt werden, so daß eine gewünschte gute Ausbeute an großvolumigen Pellets sichergestellt ist.

Die Erfindung ist im folgenden anhand einer Zeichnung einer Vorrichtung gemäß der Erfindung an einem Ausführungsbeispiel mit weiteren Einzelheiten näher erläutert.

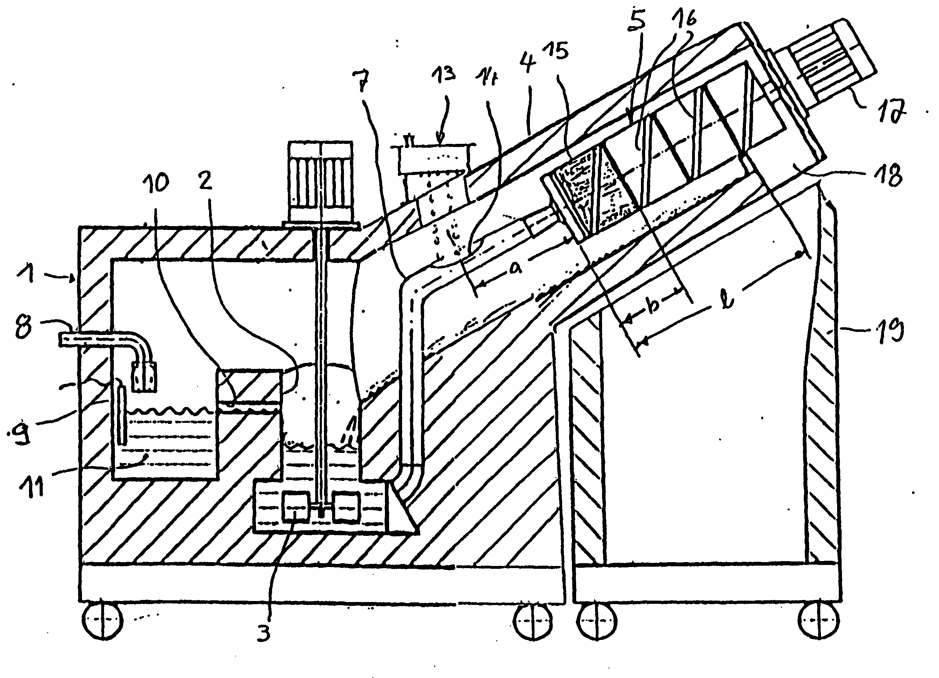

Die einzige Figur zeigt einen Vertikalschnitt durch eine erfindungsgemäße Vorrichtung.

In einem wärmeisolierten Gehäuse 1 ist in ein nach oben offenes Rohrs 2, das teilweise mit einem verflüssigten Kühlmittel, wie flüssigem Stickstoff, gefüllt ist, ein Rührwerk 3 eingetaucht. Das Rohr wird mit flüssigem Stickstoff aus einem Bad 11 gespeist, weiches über eine regelbare Flüssig-Stickstoffleitung 8 mit Flüssigstickstoff versorgt wird. Die Flüssigstickstoffzufuhr wird mittels eines nicht gezeigten Niveaureglers zum Regeln des Niveaus im Bad 11 geregelt. Es ist ein an diesen Regler angeschlossener Niveaugeber 9 dargestellt, der in den Flüssigstickstoff im Bad 11 eintaucht. Das Niveau wird auf eine solche Höhe geregelt, daß über eine Leitung 10 Flüssigstickstoff vom Bad 11 in das Rohr 2 nachströmt, wobei das Niveau im Rohr 2 deutlich niedriger als dasjenige im Bad 11 gehalten ist.

Das Rührwerk 3 fördert den so dosierten flüssigen Stickstoff in ein Förderrohr 7 auf eine Höhe deutlich oberhalb des Niveaus im Bad 11 in einen Schrägabschnitt 4 des Gehäuses 1. Im unteren Bereich des Schrägabschnittes 4 ist eine Eintragvorrichtung 13 für den zu pelletierenden flüssigen Stoff, wie eine Starterkultur, angeordnet. Direkt unterhalb dieser Eintragvorrichtung 13 ist eine Öffnung 14 im Förderrohr 7 angeordnet derart, daß der Stoff aus der Eintragvorrichtung in den Förderstrom des Kühlmittels über die Öffnung 14 eintropfen kann, wie dargestellt.

Im Abstand a von der Öffnung 14 mündet das Förderrohr 7 in eine insgesamt mit der Bezugszahl 5 bezeichnete Trennvorrichtung, die als Bandschnecke ausgebildet ist. Im ersten Drittel, d.h. im Bereich der Länge b der Gesamtlänge I dieser Trennvorrichtung hat die Bandschnecke eine Vollummantelung 15, um eine Gefrierzone zu bilden. Die Bandschnecke ist, wie bekannt mit Siebböden 16 ausgestattet und wird durch einen Motor 17 in langsame Drehung versetzt. Mit 18 ist eine Austragsöffnung für den pelletierten Stoff bezeichnet, der über die Austragsöffnung 18 in einen wegfahrbaren Behälter 19 fällt.

Flüssiger Stickstoff fließt über den schrägen Boden 20 des Schrägabschnitts 4 wieder in das Rohr 2 zurück.

Die Drehzahl des Rührwerkes 3 und die Abmessungen des Förderrohrs 7 sind so gewählt, daß die Strömungsgeschwindigkeit im Förderrohr 7, insbesondere im Bereich a zwischen Öffnung 14 des Förderrohrs 7 und Beginn der Gefrierzone 15 der Bandschnecke 5, eine laminare Strömung des Stickstoff-/Stoffstromes zur Folge hat. Bei der dargestellten Ausführung liegt diese Geschwindigkeit unter 1 m/s, und die Verweildauer des Stoffs im Abschnitt a beträgt mindestens 5 s, um ein ausreichendes Anfrieren des Stoffes zu gewährleisten. Die Verweildauer des Stoffes in der vollummantelten Gefrierzone 15 des Stoffes (Länge b) beträgt mindestens 10 s, um ein Ausfrieren von Pellets des Stoffes eines Durchmessers größer 4 mm zu gewährleisten.

Die in der obigen Beschreibung, den Figuren und den Ansprüchen offenbarten Merkmale können sowohl einzeln als auch in beliebiger Kombination für die Verwirklichung der Erfindung von Bedeutung sein.

## Patentansprüche

1. Verfahren zum Peiletieren oder Granulieren eines flüssigen oder pastösen Stoffes in einem verflüssigten, tiefsiedenden Kühlmittel, wobei der Stoff in einen Strom des Kühlmittels eingetragen und zusammen mit dem Kühlmittel einer Trennvorrichtung zugeführt wird, in welcher der Stoff vom Kühlmittel getrennt und dieses wieder in den Verfahrenskreislauf zurückgeführt wird,
**dadurch gekennzeichnet,**
**daß** der Stoff in einem laminaren Strom des Kühlmittels in einer Strömungsstrecke vor der Trennvorrichtung (5) angefroren und in einer Gefrierzone (15) der Trennvorrichtung (5) ausgefroren wird.

2. Verfahren nach Anspruch 1,
**dadurch gekennzeichnet,**
**daß** der Stoff in den laminaren Strom des Kühlmittels eingetropft wird.

3. Verfahren nach Anspruch 1 oder 2,
**dadurch gekennzeichnet,**
**daß** die Geschwindigkeit des Kühlmittels in dem laminaren Strom mindestens im Bereich (a) der Stoffeinleitung (bei 14) bis zur Trennvorrichtung (5) unter 1 m/s liegt.

4. Verfahren nach Anspruch 3,
**dadurch gekennzeichnet,**
**daß** die Verweildauer des Stoffes in dem genannten Bereich (a) bei mindestens 5s liegt.

5. Verfahren nach einem der Ansprüche 1 bis 4,
**dadurch gekennzeichnet,**
**daß** die Verweildauer des Stoffes in der Gefrierzone (15) mindestens 10s beträgt.

6. Vorrichtung zum Peiletieren oder Granulieren eines flüssigen oder pastösen Stoffes in einem verflüssigten, tiefsiedenden Kühlmittel mit einem wärmeisolierten Gehäuse (1) enthaltend eine Pumpe (3) für das flüssige Kühlmittel und eine Rohrleitung (7), über welche das Kühlmittel zu einer Trennvorrichtung (5) förderbar ist, sowie mit einer Eintragvorrichtung (13) für den zu pelletierenden Stoff,
**dadurch gekennzeichnet,**
**daß** die Eintragvorrichtung (13) den Stoff in die Rohrleitung (7) an einer Eintragsstelle (14) stromabwärts von der Pumpe (3) einbringt, daß die Strömungsgeschwindigkeit und die Abmessungen zumindest im Abschnitt (a) der Rohrleitung (7) ab der Eintragstelle (14) bis zur Trennvorrichtung (5) so gewählt sind, daß laminare Strömung in der Rohrleitung herrscht, und daß die Trennvorrichtung (5) einen ersten, als Gefrierzone (15) dienenden Abschnitt aufweist, in welchen die Rohrleitung (7) mündet.

7. Vorrichtung nach Anspruch 6,
**dadurch gekennzeichnet,**
**daß** die Pumpe (3) ein Rührwerk ist, das in ein vertikales, mit dem Kühlmittel beschichtetes Rohr (2) hineinragt, und daß die Rohrleitung (7) von dem Fuß des Rohres ausgeht.

8. Vorrichtung nach Anspruch 6 oder 7,
**dadurch gekennzeichnet,**
**daß** die Eintragvorrichtung (13) oberhalb der Rohrleitung (7) angeordnet ist und den Stoff über eine Öffnung (14) in der Rohrleitung (7) unter Schwerkraftwirkung eintropft.

9. Vorrichtung nach einem der Ansprüche 6 bis 8,
**dadurch gekennzeichnet,**
**daß** der Abstand (a) vom Einbringort (14) des Stoffes in die Rohrleitung (7) bis zu deren Mündung in die Gefrierzone (15) und die Geschwindigkeit in dem entsprechenden Bereich (a) der Rohrleitung so gewählt sind , daß die Verweüdauer des eingetropften Stoffes in diesem Bereich mindestens 5s beträgt.

10. Vorrichtung nach einem der Ansprüche 6 bis 9,
**dadurch gekennzeichnet,**
**daß** die Trennvorrichtung (5) eine Bandschnecke ist, deren an die Mündung der Rohrleitung (7) anschließender erster Abschnitt eine Vollummantelung zum Bilden der Gefrierzone (15) aufweist.

11. Vorrichtung nach Anspruch 8,
**dadurch gekennzeichnet,**
**daß** die Länge (b) der Gefrierzone (15) etwa ein Drittel der Gesamtlänge (I) der Bandschnecke (5) beträgt.

## Claims

1. Process for pelletizing or granulating a liquid or pasty material in a liquefied, low-boiling coolant, the material being introduced into a stream of the coolant and being fed together with the coolant to a separating apparatus, in which the material is separated from the coolant and the latter is recirculated into the process cycle, **characterized in that** the material is partially frozen in a laminar flow of the coolant in a flow section upstream of the separating apparatus (5) and is then fully frozen in a freezing zone (15) of the separating apparatus (5).

2. Process according to Claim 1, **characterized in that** the material is added dropwise to the laminar flow of the coolant.

3. Process according to Claim 1 or 2, **characterized in that** the velocity of the coolant in the laminar flow, at least in the region (a) from where the material is introduced (at 14) to the separating apparatus (5), is less than 1 m/s.

4. Process according to Claim 3, **characterized in that** the residence time of the material in the said region (a) is at least 5 s.

5. Process according to one of Claims 1 to 4, **characterized in that** the residence time of the material in the freezing zone (15) is at least 10 s.

6. Apparatus for pelletizing or granulating a liquid or pasty material in a liquefied, low-boiling coolant, having a thermally insulated housing (1) containing a pump (3) for the liquid coolant and a pipeline (7), via which the coolant can be fed to a separating apparatus (5), and having an introduction apparatus (13) for introducing the material that is to be pelletized, **characterized in that** the introduction apparatus (13) introduces the material into the pipeline (7) at an introduction location (14) downstream of the pump (3), **in that** the flow velocity and the dimensions, at least in the section (a) of the pipeline (7) starting from the introduction location (14) to the separating apparatus (5), are selected in such a way that laminar flow prevails in the pipeline, and **in that** the separating apparatus (5) has a first portion, which serves as a freezing zone (15) and into which the pipeline (7) opens out.

7. Apparatus according to Claim 6, **characterized in that** the pump (3) is a stirrer mechanism which projects into a vertical pipe (2) coated with the coolant, and **in that** the pipeline (7) leads from the foot of the pipe.

8. Apparatus according to Claim 6 or 7, **characterized in that** the introduction apparatus (13) is arranged above the pipeline (7) and adds the material dropwise under the force of gravity via an opening (14) in the pipeline (7).

9. Apparatus according to one of Claims 6 to 8, **characterized in that** the distance (a) from the location (14) where the material is introduced into the pipeline (7) to the point where the pipeline opens out into the freezing zone (15) and the velocity in the corresponding region (a) of the pipeline are selected in such a way that the residence time of the material which is being introduced dropwise in this region is at least 5 s.

10. Apparatus according to one of Claims 6 to 9, **characterized in that** the separating apparatus (5) is a worm belt, the first portion of which, adjoining the opening of the pipeline (7), is fully sheathed so as to form the freezing zone (15).

11. Apparatus according to Claim 8, **characterized in that** the length (b) of the freezing zone (15) amounts to approximately one third of the total length (1) of the worm belt (5).

## Revendications

1. Procédé de production de pastilles ou de granulés à partir d'une substance liquide ou pâteuse dans un agent de refroidissement liquéfié et à bas point d'ébullition, dans lequel la substance est introduite dans un écoulement d'agent de refroidissement et est amenée avec celui-ci à un dispositif de séparation dans lequel la substance est séparée de l'agent de refroidissement et ce dernier est renvoyé dans le circuit du procédé, **caractérisé en ce que** dans un parcours d'écoulement situé en amont du dispositif de séparation (5), la substance est congelée dans un écoulement laminaire de l'agent de refroidissement pour être séparée à l'état congelé dans une zone de congélation (15) du dispositif de séparation (5).

2. Procédé selon la revendication 1, **caractérisé en ce que** la substance est introduite goutte-à-goutte dans l'écoulement laminaire d'agent de refroidissement.

3. Procédé selon les revendications 1 ou 2, **caractérisé en ce qu'**au moins dans la zone (a) située entre l'emplacement d'introduction de substance (à la référence numérique 14) et le dispositif de séparation (5), la vitesse de l'agent de refroidissement dans l'écoulement laminaire est inférieure à 1 m/s

4. Procédé selon la revendication 3, **caractérisé en ce que** la durée de séjour de la substance dans ladite zone (a) est d'au moins 5 s.

5. procédé selon l'une des revendications 1 à 4, **caractérisé en ce que** la durée de séjour de la substance dans la zone de congélation (15) est d'au moins 10 s.

6. Dispositif de production de pastilles ou de granulés à partir d'une substance liquide ou pâteuse dans un agent de refroidissement liquéfié et à bas point d'ébullition, qui présente un caisson thermiquement isolant (1) qui contient une pompe (3) pour l'agent liquide de refroidissement et un conduit tubulaire (7) au moyen duquel on peut amener l'agent de refroidissement à un dispositif de séparation (5), et qui présente également un dispositif d'introduction (13) de la substance à transformer en pastilles, **caractérisé en ce que** le dispositif d'introduction (13) introduit la substance dans le conduit tubulaire (7) en un emplacement d'introduction (14) situé en aval de la pompe (3), **en ce qu'**au moins dans la zone (a) du conduit tubulaire (7) située entre l'emplacement d'introduction (14) et le dispositif de séparation (5), la vitesse d'écoulement et les dimensions sont sélectionnées de telle sorte que l'écoulement soit laminaire dans le conduit tubulaire et **en ce que** le dispositif de séparation (5) présente un premier tronçon qui sert de zone de congélation (15) et dans lequel débouche le conduit tubulaire (7).

7. Dispositif selon la revendication 6, **caractérisé en ce que** la pompe (3) est un mélangeur qui pénètre dans un tube vertical (2) revêtu d'agent de refroidissement et **en ce que** le conduit tubulaire (7) part du pied du tube.

8. Dispositif selon les revendications 6 ou 7, **caractérisé en ce que** le dispositif d'introduction (13) es agencé au-dessus du conduit tubulaire (7) et introduit par gravité la substance goutte-à-goutte dans le conduit tubulaire (7) par une ouverture (14).

9. Dispositif selon l'une des revendications 6 à 8, **caractérisé en ce que** la distance (a) entre l'emplacement d'introduction (14) de la substance dans le conduit tubulaire (7) et l'embouchure de ce dernier dans la zone de refroidissement (15) et la vitesse dans la zone correspondante (a) du conduit tubulaire sont sélectionnées de telle sorte que le temps de séjour de la substance introduite au goutte-à-goutte dans cette zone est d'au moins 5 s.

10. Dispositif selon l'une des revendications 6 à 9, **caractérisé en ce que** le dispositif de séparation (5) est une vis d'Archimède dont le premier tronçon, adjacent à la bouche du conduit tubulaire (7), est entièrement enveloppé pour former la zone de congélation (15).

11. Dispositif selon la revendication 8, **caractérisé en ce que** la longueur (b) de la zone de congélation (15) est sensiblement égale au tiers de la longueur totale (1) de la vis d'Archimède (5).
